# FASCICULE DE BREVET EUROPEEN

(11) **EP 1 712 976 B1**
(45) Date de publication et mention de la délivrance du brevet: **25.03.2009**
(21) Numéro de dépôt: 06112465.7
(22) Date de dépôt: 11.04.2006
(51) Int. Cl.: G06F 21/00

(54) **Protection de données d'une mémoire associée à un microprocesseur**
Schutz von Daten eines mit einem Mikroprozessor verknüpften Speichers
Protection of data in a memory associated with a microprocessor

(30) Priorité: 11.04.2005 FR 0550923
(43) Date de publication de la demande: 18.10.2006
(73) Titulaire: ST MICROELECTRONICS S.A., 92120 Montrouge (FR)
(72) Inventeur: Romain, Fabrice, 83560, Rians (FR); Pomet, Alain, 13790, Rousset (FR)
(74) Mandataire: de Beaumont, Michel

(56) Documents cités:
- US-B1- 6 247 151
- HAGAI BAR-EL ET AL: "The Sorcerer's Apprentice Guide to Fault Attacks" WORKSHOP ON FAULT DETECTION AND TOLERANCE IN CRYPTOGRAPHY, [Online] 7 mai 2004 (2004-05-07), XP002329915 Extrait de l'Internet: URL:http://www.gemplus.com/smart/rd/public ations/> [extrait le 2005-09-14]
- MOORE S ET AL: "Balanced self-checking asynchronous logic for smart card applications" MICROPROCESSORS AND MICROSYSTEMS, IPC BUSINESS PRESS LTD. LONDON, GB, vol. 27, no. 9, octobre 2003 (2003-10), pages 421-430, XP004453315 ISSN: 0141-9331
- JACOB SAVIR: "Random Pattern Testability of Memory Address Logic" IEEE TRANSACTIONS ON COMPUTER-AIDED DESIGN OF INTEGRATED CIRCUITS AND SYSTEMS, [Online] vol. 17, no. 12, décembre 1998 (1998-12), pages 1310-1318, XP002344968 Extrait de l'Internet: URL:http://ieeexplore.ieee.org/> [extrait le 2005-07-14]

## Description

### Domaine de l'invention

La présente invention concerne de façon générale des circuits électroniques et, plus particulièrement, la protection de données contenues dans une mémoire associée à un microprocesseur contre une extraction de ces données, notamment, suite à des injections de fautes dans le fonctionnement du circuit électronique. L'invention concerne plus particulièrement les microcontrôleurs intégrant à la fois un microprocesseur et des éléments de mémorisation de données.

### Exposé de l'art antérieur

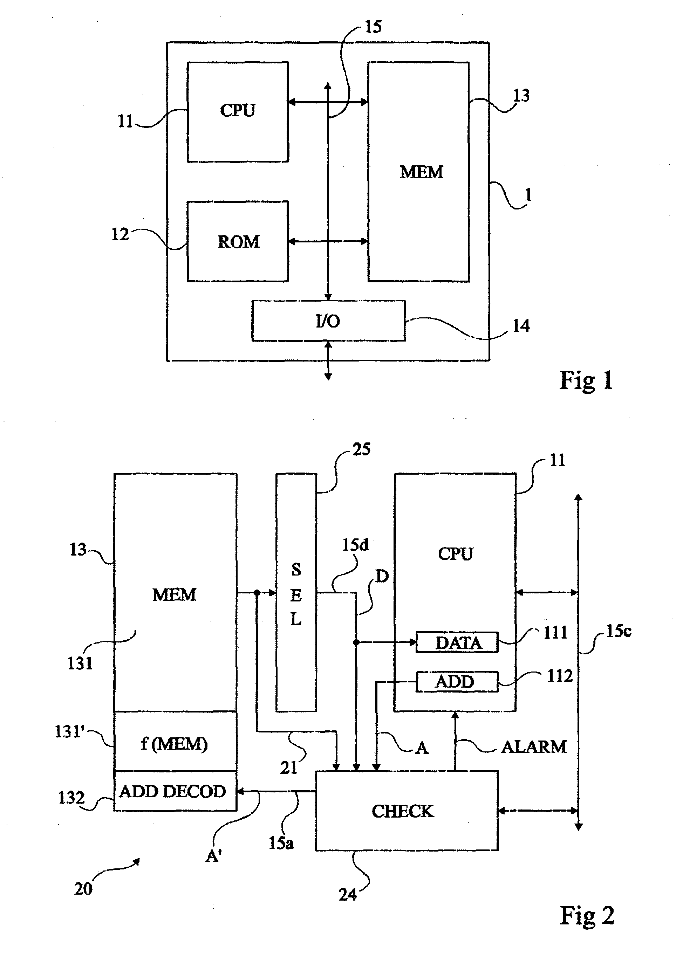

La figure 1 représente partiellement, de façon très schématique et sous forme de blocs, un exemple d'architecture simplifiée d'un circuit intégré 1, par exemple, un microcontrôleur, du type auquel s'applique la présente invention. Le circuit 1 comporte une unité centrale de traitement 11 (CPU) associée à une mémoire programme 12 (ROM) généralement de type mémoire morte, à une ou plusieurs mémoires 13 (MEM) de données et à un circuit 14 d'entrée/sortie (I/O) permettant l'échange de données avec l'extérieur du circuit. Les différents éléments communiquent par un ou plusieurs bus 15 de données, d'adresse et de commande. La ou les mémoires 13 peuvent être de n'importe quel type (mémoire vive, mémoire non volatile réinscriptibles ou non, etc.) ou une combinaison de plusieurs types de mémoires.

Parmi les attaques possibles effectuées par des fraudeurs pour extraire des données confidentielles (par exemple, un code secret) contenues dans la mémoire 13, l'invention s'applique aux attaques dites par injection de fautes (DFA ou "Differential Fault Analysis") qui consistent à perturber le fonctionnement du microcontrôleur 1 au moyen d'un rayonnement (laser, infrarouge, rayon X, etc.) ou par d'autres moyens (par exemple, en agissant sur l'alimentation du composant).

Certains circuits intégrés comprennent des outils logiciels pour détecter de telles perturbations par une vérification de l'exécution correcte des programmes. Par exemple, on exécute deux fois les mêmes instructions et on vérifie qu'elles conduisent aux mêmes résultats, ou on effectue un calcul de signature sur des données extraites de la mémoire 13.

Une catégorie de perturbations particulièrement efficaces consiste à perturber de façon directive (orientation d'un rayonnement par exemple), les circuits périphériques (décodeur d'adresses) de la mémoire 13 pendant une commande de lecture d'une zone autorisée de cette mémoire. Par zone autorisée, on entend une zone dont les données qu'elle contient sont autorisées à sortir du microcontrôleur 1 contrairement à celles de zones protégées contenant des données confidentielles devant rester dans ce circuit. Perturber par exemple le décodeur d'adresses (supposé contenu dans le bloc 13) de la mémoire permet un saut d'une zone mémoire autorisée vers une zone protégée. Comme la commande exécutée est alors une commande de lecture mémoire autorisée, le fraudeur est susceptible de récupérer les données sensibles sans que les mécanismes de contrôle d'accès détectent cette violation d'accès. Par exemple, en cas de contrôle de l'adresse présente sur le bus 15 par l'unité centrale, celle-ci est correcte dans la mesure où la perturbation n'intervient que dans la zone périphérique de la mémoire 13. Les systèmes de protection logiciels sont le plus souvent inefficaces contre ce genre de fraude.

Un autre inconvénient des solutions "logicielles" est qu'elles prennent du temps d'exécution sur la capacité de l'unité centrale de traitement.

Un problème est d'être capable de détecter une telle perturbation. Une fois la perturbation détectée, de nombreuses solutions existent selon les applications pour soit bloquer le composant, soit interdire la sortie des données sensibles, etc.

Une autre technique de fraude connue consiste à perturber les amplificateurs de lecture des mémoires (notamment des mémoires mortes), afin de modifier la valeur lue et ainsi modifier le déroulement du programme ayant engendré cette lecture. Il est alors possible, par exemple, de modifier le résultat de comparaison pour donner accès à un nombre illimité d'essais du code secret (pin code) d'une carte à puce.

### Résumé de l'invention

La présente invention vise à pallier tout ou partie des inconvénients des systèmes connus de protection d'un microcontrôleur contre d'éventuelles fraudes par injection de fautes dans le fonctionnement du circuit.

L'invention vise plus particulièrement à proposer une solution qui permet de détecter une perturbation du décodeur d'adresses d'un circuit.

L'invention vise également à ne pas nuire au fonctionnement de l'unité centrale de traitement du microcontrôleur.

Pour atteindre tout ou partie de ces objets, ainsi que d'autres, la présente invention prévoit un procédé de vérification de cohérence entre une donnée lue dans une première zone d'une mémoire d'un microcontrôleur et l'adresse de cette donnée, consistant à :
calculer une signature numérique courante de la donnée lue au moyen d'une fonction prenant en compte également l'adresse de cette donnée dans la mémoire ; et
vérifier la cohérence entre la signature courante et une signature préalablement enregistrée.

Selon un mode de mise en oeuvre de la présente invention, la signature enregistrée est stockée dans ladite première zone de la mémoire à la même adresse que la donnée.

Selon un mode de mise en oeuvre de la présente invention, la signature enregistrée est stockée dans une deuxième zone de la mémoire.

Selon un mode de mise en oeuvre de la présente invention, ladite signature enregistrée est extraite de ladite deuxième zone de la mémoire pendant des périodes où aucune lecture n'est requise dans la première zone.

Selon un mode de mise en oeuvre de la présente invention, au moins quatre groupes de registres de stockage temporaire sont utilisés pour stocker respectivement au moins les données, leurs adresses, les signatures extraites de la mémoire et les signatures courantes calculées.

Selon un mode de mise en oeuvre de la présente invention, un cinquième groupe de registres stocke les adresses des signatures enregistrées dans la mémoire.

Selon un mode de mise en oeuvre de la présente invention, les groupes de registres sont de type à décalage.

Selon un mode de mise en oeuvre de la présente invention, le procédé est mis en oeuvre par une unité centrale de traitement du microcontrôleur.

Selon un mode de mise en oeuvre de la présente invention, le procédé est mis en oeuvre par un circuit distinct d'une unité centrale de traitement du microcontrôleur.

Selon un mode de mise en oeuvre de la présente invention, une éventuelle saturation du nombre d'accès mémorisés dans les registres est détectée.

La présente invention prévoit également un circuit de vérification d'une signature numérique d'une donnée lue dans une mémoire pour détection d'une éventuelle tentative de fraude, comportant des éléments de stockage temporaire au moins d'adresse, de données, de signatures courantes fonctions des adresses et données et de signatures enregistrées dans la mémoire pour plusieurs données successives, et des éléments de calcul permettant de calculer une signature (fc) numérique courante de la donnée lue au moyen d'une fonction prenant également en compte l'adresse de cette donnée dans la mémoire et de comparaison permettant de vérifier la cohérence entre la signature (fc) numérique courante et une signature préalablement enregistrée.

Selon un mode de réalisation de la présente invention, un des éléments de mémorisation temporaire stocke les adresses des signatures enregistrées dans la mémoire.

La présente invention prévoit également une carte à puce comportant un circuit de vérification.

### Brève description des dessins

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, qui a été décrite précédemment représente, de façon très schématique et sous forme de blocs, un exemple d'architecture simplifiée d'un circuit intégré auquel s'applique la présente invention ;
la figure 2 représente partiellement, de façon très schématique et sous forme de blocs, un mode de réalisation d'un circuit de détection de tentatives de fraude selon la présente invention ; et
la figure 3 représente un mode de réalisation plus détaillé du circuit de vérification de la figure 2.

Les mêmes éléments ont été désignés par les mêmes références aux différentes figures. Pour des raisons de clarté, seuls les éléments qui sont utiles à la compréhension de l'invention ont été représentés aux figures et seront décrits par la suite. En particulier, l'exploitation faite de la détection de fraude éventuelle n'a pas été détaillée, l'invention étant compatible avec les exploitations faites classiquement en cas de détection d'une tentative de fraude. De plus, on fera référence au terme "donnée" pour désigner n'importe quelle information numérique, qu'il s'agisse d'une donnée proprement dite ou d'une instruction d'un programme etc. En outre, seule la lecture des données dans la mémoire sera décrite, l'invention ne modifiant pas le fonctionnement en écriture de ces données.

### Description détaillée

La figure 2 représente partiellement, de façon très schématique et sous forme de blocs, un mode de réalisation d'un circuit intégré formant un microcontrôleur 20 selon la présente invention. Ce circuit 20 est, par exemple, contenu dans une carte à puce.

Comme précédemment, un circuit intégré du type auquel s'applique l'invention comporte une unité centrale de traitement 11 (CPU), une ou plusieurs mémoires 13 (symbolisées ici par un plan mémoire 131 (MEM), et son décodeur d'adresse 132 (ADD DECOD). Le circuit 20 comporte également une mémoire programme (12, figure 1). Celle-ci n'a pas été illustrée en figure 2 car l'invention protège également contre une tentative de fraude par perturbation du fonctionnement du programme pour en extraire des informations confidentielles (par exemple, une clé native, inscrite à la fabrication du circuit). L'invention sera donc exposée en relation avec l'exemple d'une mémoire 13, mais elle s'applique à n'importe quelle mémoire intégrée avec un microprocesseur (unité centrale de traitement) dans le circuit 20 que l'on souhaite protéger. L'unité 11 comporte (ou est associée à), de façon classique, un registre 111 de données (DATA) et un registre 112 d'adresses (ADD) pour stockage temporaire et contrôle du fonctionnement de la mémoire. En figure 2, les bus 15 ont été représentés sous la forme d'un bus de commande 15c, d'un bus d'adresses 15a et d'un bus de données 15d. Bien entendu, ces bus comportent des signaux à destination d'autres circuits du contrôleur qui n'ont pas été illustrés en figure 2.

Selon le mode de réalisation de la figure 2, le microcontrôleur 20 comporte un circuit 24 (CHECK) de vérification de cohérence des données lues dans la mémoire 13. Ce circuit est un circuit de calcul de signature (calcul d'un bit ou d'un mot numérique correspondant à l'application d'un algorithme au moins aux données lues dans la mémoire). De préférence, le circuit 24 est autonome. En variante, il est commandé par l'unité 11 et en reçoit alors des signaux depuis le bus 15c. Le circuit 24 reçoit les données lues dans la mémoire 13 par le bus 15d.

Selon ce mode de réalisation préféré de l'invention, le plan mémoire 131 comporte également une zone 131' (f(MEM)) de stockage de signatures associées aux données contenues dans tout ou partie (par exemple, uniquement des zones contenant des données considérées comme sensibles du point de vue de la confidentialité) du plan mémoire 131. Un circuit de sélection 25 (SEL) sert, dans cet exemple, à transférer vers l'unité centrale 11, plus particulièrement son registre 111, les données D lues dans le plan mémoire 131 tandis que ces données sont également orientées vers le circuit 24 et que des signatures issues de la zone 131' du plan mémoire sont fournies au circuit 24 directement par une liaison 21 en amont du sélecteur 25. En pratique, le circuit 25 est constitué d'un ensemble d'amplificateurs à trois états constituant un circuit tampon (buffer) en sortie de la mémoire 13.

Le circuit 24 fournit un signal d'interruption (ALARM) à l'unité centrale 11 dans le cas de détection d'une tentative de fraude. De plus, il fournit l'adresse A' de lecture de données dans le plan mémoire par le bus d'adresse 15a et reçoit les adresses A issues du registre 112 de l'unité centrale. Fonctionnellement, le circuit 24 est, du point de vue adressage, intercalé entre l'unité centrale (registre 112) et la mémoire 13.

Selon un mode de réalisation préféré de l'invention, le circuit 24 comporte des éléments de mémorisation temporaire afin d'utiliser les temps morts de l'unité centrale 11 en termes d'adressage mémoire pour effectuer des calculs de signature. En d'autres termes, la vérification de cohérence de la donnée lue dans la mémoire par rapport à sa signature est effectuée pendant que l'unité centrale est disponible. En particulier, l'extraction des signatures stockées dans la zone 131' s'effectue pendant des cycles où l'unité 11 n'a pas besoin d'accéder à la mémoire 13.

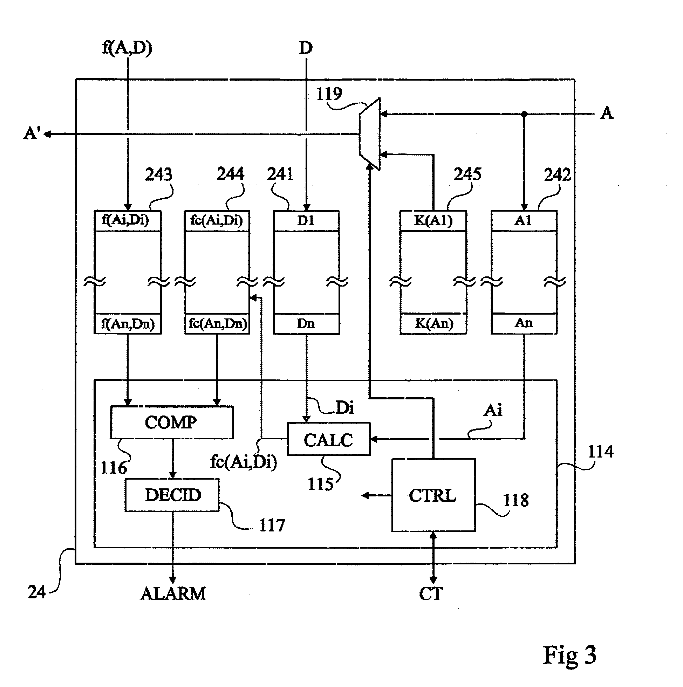

La figure 3 représente, de façon schématique et sous forme de blocs, un exemple de circuit 24 selon un mode de réalisation préféré de l'invention.

De préférence, la signature tient compte non seulement de la donnée mais également de son adresse de stockage dans la mémoire 13. Ainsi, le circuit 24 reçoit l'adresse A fournie par le registre 112 de l'unité centrale 11, la donnée D issue du bus 15d correspondant à la donnée envoyée à l'unité centrale 11, des signaux de commande CT provenant du bus de commande 15c et essentiellement de l'unité centrale 11 et des signatures f(A, D) qui sont extraites de la zone 131' de la mémoire 13 sur demande et qui sont fonction de l'adresse A et de la donnée D. Le circuit 24 fournit au décodeur d'adresse 132 une adresse A' correspondant soit à l'adresse A requise par l'unité centrale 11 soit à l'adresse d'une signature pour vérification. Le circuit 24 fournit également le signal ALARM indicateur d'une éventuelle détection de tentative de fraude à l'attention de l'unité centrale 11.

Selon ce mode de réalisation de l'invention, le circuit 24 comporte plusieurs groupes ou piles de registres (ou autres éléments de mémorisation temporaire) pour stocker temporairement des informations afin de permettre un calcul de signature pendant les temps morts de l'unité centrale. En d'autres termes, les éléments de calcul utilisés par le circuit 24 (symbolisés en figure 3 par un bloc 114) peuvent être des circuits dédiés ou correspondre à des circuits de l'unité centrale 11. Ils sont alors de préférence utilisés pendant des périodes où l'unité centrale 11 n'a pas besoin d'effectuer d'autres traitements pour le reste du circuit.

Une première pile 241 de registres contient les données D1 à Dn extraites du plan mémoire 131. Une deuxième pile 242 de registres contient les adresses A1 à An correspondantes dans la mémoire. Une troisième pile 243 de registres est destinée à contenir les signatures f(A1, D1) à f(An, Dn) stockées dans la zone 131' et qui correspondent aux données et aux adresses des piles 241 et 242. Une quatrième pile 244 de registres contient des signatures courantes fc(A1, D1) à fc(An, Dn) calculées à partir de la donnée Di (i compris entre 1 et n) de l'adresse Ai courante pour vérification par rapport aux signatures préenregistrées. Enfin, une cinquième pile 245 de registres contient les adresses K(A1) à K(An) de ces signatures.

Le bloc de calcul 114 comprend, par exemple et au moins fonctionnellement, un élément 115 (CALC) de calcul d'une signature courante fc (Ai, Di) à partir de l'adresse Ai et de la donnée Di. Le résultat de l'élément 115 est envoyé dans un registre de la pile 244 à la position correspondante. Un élément 116 (COMP) de comparaison compare la signature extraite de la mémoire f(Ai, Di) à la signature courante calculée fc(Ai, Di). Le résultat de la comparaison est envoyé sur un bloc 117 de décision (DECID) générant si besoin le signal ALARM. Un bloc 118 de commande (CTRL) reçoit les signaux CT du bus 15c et synchronise le fonctionnement des différents éléments du bloc 114. Le circuit 118 sélectionne, pour adressage de la mémoire (adresse A'), une adresse entre l'adresse A fournie par le microcontrôleur et l'adresse de signature K(Ai) fournie par la pile 245, au moyen d'un multiplexeur 119. Les signatures sont stockées à des positions différentes de celles des données dans le plan mémoire.

De préférence, un autre signal d'alerte (non représenté) est activé en cas de débordement de pile, c'est-à-dire si le circuit 114 n'a pas le temps de contrôler les signatures en raison d'un trop grand nombre d'accès mémoire demandés par l'unité centrale 11.

Selon un mode de réalisation préféré, les piles de registres ont toutes la même taille (n registres) et sont de type FIFO.

Selon un autre mode de réalisation, les adresses K(Ai) sont calculées à partir des adresses Ai, par exemple, en temps réel.

Un avantage de la présente invention est qu'en utilisant des moments où l'unité centrale n'adresse pas la mémoire pour aller rechercher des signatures, on évite toute perte de temps par rapport au calcul effectué par l'application principale.

Un autre avantage de l'invention est qu'en prenant en compte l'adresse de stockage de la donnée dans la mémoire, on améliore la fiabilité du système.

Selon une première variante, le calcul de signature (bloc 115) est remplacé par une deuxième lecture de la même adresse dans la mémoire 13 pendant un cycle non utilisé de lecture, de façon à vérifier la cohérence entre les deux données. Cette deuxième lecture est alors vérifiée avec la première pour la valider. En effet, en cas de tentative de fraude par injection de fautes, les deux lectures seront différentes l'une de l'autre. Cela revient à considérer que la signature de la donnée est cette donnée elle-même. De préférence, un code correcteur d'erreur prenant en compte l'adresse et la donnée est calculé et stocké dans la zone correspondante des mots en mémoire. On vérifie alors également les fautes éventuelles dans le décodeur d'adresse de la mémoire. Cette variante requiert toutefois de "signer" (calculer le code correcteur d'erreur fonction de l'adresse et de la donnée) pour toute la mémoire et ne permet pas de ne "signer" que les zones à protéger.

Selon une autre variante préférée, on utilise un algorithme tel qu'un code correcteur d'erreur pour calculer le résultat d'une fonction prenant en compte l'adresse et la donnée, et on compare le résultat du code correcteur courant à un code (signature) stocké dans la zone 131' de la mémoire 13. Le choix de la fonction de chiffrement (code correcteur d'erreur) dépend de l'application et de la taille de la zone mémoire que l'on peut affecter au stockage des signatures.

La synchronisation du fonctionnement du circuit 24 de l'invention, pour à la fois mémoriser les résultats de signature en cas de changement des données dans la mémoire et effectuer les vérifications décrites fonctionnellement ci-dessus, est à la portée de l'homme du métier, l'invention étant compatible avec n'importe quel calcul de signature classique.

Bien entendu, la présente invention est susceptible de diverses variantes et modifications qui apparaîtront à l'homme de l'art. En particulier, la mise en oeuvre pratique de l'invention, que ce soit par des moyens logiciels ou matériels, à partir des indications fonctionnelles données ci-dessus est à la portée de l'homme du métier en utilisant des outils en eux-mêmes classiques.

## Revendications

1. Procédé de vérification de cohérence entre une donnée (D) lue dans une première zone (131) d'une mémoire (13) d'un microcontrôleur (20) et l'adresse (A) de cette donnée, **caractérisé en ce qu'**il consiste à :
calculer une signature (fc) numérique courante de la donnée lue au moyen d'une fonction prenant en compte également l'adresse de cette donnée dans la mémoire ; et
vérifier la cohérence entre la signature courante et une signature (f) préalablement enregistrée.

2. Procédé selon la revendication 1, dans lequel la signature enregistrée (f) est stockée dans ladite première zone (131) de la mémoire (13) à la même adresse (A) que la donnée (D).

3. Procédé selon la revendication 1 ou 2, dans lequel la signature enregistrée (f) est stockée dans une deuxième zone (131') de la mémoire (13).

4. Procédé selon la revendication 3, dans lequel ladite signature enregistrée (f) est extraite de ladite deuxième zone (131') de la mémoire (13) pendant des périodes où aucune lecture n'est requise dans la première zone (131).

5. Procédé selon l'une quelconque des revendications 1 à 4, dans lequel au moins quatre groupes de registres de stockage temporaire (241, 242, 243, 244) sont utilisés pour stocker respectivement au moins les données (D), leurs adresses (A), les signatures (f) extraites de la mémoire (13) et les signatures courantes calculées (fc).

6. Procédé selon la revendication 5, dans lequel un cinquième groupe (245) de registres stocke les adresses (K(A)) des signatures (f) enregistrées dans la mémoire (13).

7. Procédé selon la revendication 5 ou 6, dans lequel les groupes de registres sont de type à décalage.

8. Procédé selon l'une quelconque des revendications 1 à 7, mis en oeuvre par une unité centrale de traitement (11) du microcontrôleur.

9. Procédé selon l'une quelconque des revendications 1 à 7, mis en oeuvre par un circuit (24) distinct d'une unité centrale de traitement (11) du microcontrôleur (20).

10. Procédé selon la revendication 9, dans lequel une éventuelle saturation du nombre d'accès mémorisés dans les registres est détectée.

11. Circuit (24) de vérification d'une signature numérique d'une donnée lue dans une mémoire (13) pour détection d'une éventuelle tentative de fraude, **caractérisé en ce qu'**il comporte des éléments (241, 242, 243, 244, 245) de stockage temporaire au moins d'adresse (A), de données (D), de signatures courantes (fc) fonctions des adresses et données et de signatures enregistrées dans la mémoire (f) pour plusieurs données successives, et des éléments (114) de calculer permettant de calculer une signature (fc) numérique courante de la donnée lue au moyen d'une fonction prenant également en compte l'adresse de cette donnée dans la mémoire et de comparaison permettant de vérifier la cohérence entre la signature (fc) numérique courante et une signature préalablement enregistrée.

12. Circuit selon la revendication 11, dans lequel un des éléments de mémorisation temporaire stocke les adresses (K(A)) des signatures (f) enregistrées dans la mémoire (13).

13. Carte à puce comportant un circuit selon la revendication 11 ou 12.

## Claims

1. A method for checking the coherence between data (D) read from a first area (131) of a memory (13) of a microcontroller (20) and the address (A) of these data, **characterized in that** it comprises the steps of:
calculating a current digital signature (fc) of the read data by means of a function also taking into account the address of these data in the memory; and
checking the coherence between the current signature and a previously-recorded signature (f).

2. The method of claim 1, wherein the recorded signature (f) is stored in said first area (131) of the memory (13) at the same address (A) as the data (D).

3. The method of claim 1 or 2, wherein the recorded signature (f) is stored in a second area (131') of the memory (13).

4. The method of claim 3, wherein said recorded signature (f) is extracted from said second area (131') of the memory (13) in periods when no reading is required from the first area (131).

5. The method of any of claims 1 to 4, wherein at least four groups of temporary storage registers (241, 242, 243, 244) are used to respectively store at least the data (D), their addresses (A), the signatures (f) extracted from the memory (13), and the current calculated signatures (fc).

6. The method of claim 5, wherein a fifth group (245) of registers stores the addresses (K(A)) of the signatures (f) recorded in the memory (13).

7. The method of claim 5 or 6, wherein the groups of registers are of shift type.

8. The method of any of claims 1 to 7, implemented by a central processing unit (11) of the microcontroller.

9. The method of any of claims 1 to 7, implemented by a circuit (24) different from a central processing unit (11) of the microcontroller (20).

10. The method of claim 9, wherein a possible saturation of the number of accesses stored in the registers is detected.

11. A circuit (24) for checking a digital signature of data read from a memory (13) for detecting a possible fraud attempt, comprising elements (241, 242, 243, 244, 245) of temporary storage at least of addresses (A), of data (D), of current signatures (fc) which are a function of the addresses and data, and of signatures recorded in the memory (f) for several successive data, and calculation and comparison elements (114) capable of calculating a current digital signature (fc) of the read data by means of a function also taking into account the address of these data in the memory; and
checking the coherence between the current signature and a previously-recorded signature (fc).

12. The circuit of claim 11, wherein one of the temporary storage elements stores the addresses (K(A)) of the signatures (f) recorded in the memory (13).

13. A smart card comprising the circuit of claim 11 or 12.

## Patentansprüche

1. Ein Verfahren zum Prüfen der Kohärenz zwischen Daten (D), gelesen von einem ersten Areal (131) von einem Speicher (13) von einem Mikrocontroller (20) und der Adresse (A) von diesen Daten, **gekennzeichnet dadurch, dass** das Verfahren die folgenden Schritte aufweist:
Berechnen einer aktuellen digitalen Signatur (fc) von den gelesenen Daten mittels einer Funktion, die auch die Adresse von diesen Daten in dem Speicher berücksichtigt, und
Prüfen der Kohärenz zwischen der aktuellen Signatur und einer zuvor aufgezeichneten Signatur (f).

2. Verfahren nach Anspruch 1, wobei die aufgezeichnete Signatur (f) in dem ersten Areal (131) von dem Speicher (13) bei der gleichen Adresse (A) wie die Daten (D) gespeichert ist.

3. Verfahren nach Anspruch 1 oder 2, wobei die aufgezeichnete Signatur (f) in einem zweiten Areal (131') von dem Speicher (13) gespeichert ist.

4. Verfahren nach Anspruch 3, wobei die aufgezeichnete Signatur (f) von dem zweiten Areal (131') von dem Speicher (13) extrahiert wird, und zwar in Perioden wenn kein Lesen von dem ersten Areal (131) erforderlich ist.

5. Verfahren nach irgendeinem der Ansprüche 1 bis 4, wobei wenigstens vier Gruppen von temporären Speicherregistern (241, 242, 243, 244) genutzt werden, um entsprechend wenigstens die Daten (D), ihre Adressen (A), die von dem Speicher (13) extrahierten Signaturen (f) und die aktuell berechneten Signaturen (fc) zu speichern.

6. Verfahren nach Anspruch 5, wobei eine fünfte Gruppe (245) von Registern die Adressen (K(A)) von den in dem Speicher (13) aufgezeichneten Signaturen (f) speichert.

7. Verfahren nach Anspruch 5 oder 6, wobei die Gruppen von Registern vom Schiebetyp sind.

8. Verfahren nach irgendeinem der Ansprüche 1 bis 7, implementiert durch eine zentrale Verarbeitungseinheit (11) von dem Mikrocontroller.

9. Verfahren nach irgendeinem der Ansprüche 1 bis 7, implementiert durch eine Schaltung (24), die von einer zentralen Verarbeitungseinheit (11) von dem Mikrocontroller (20) verschieden ist.

10. Verfahren nach Anspruch 9, wobei eine mögliche Sättigung von der Anzahl von Zugriffen, gespeichert in den Registern, detektiert wird.

11. Eine Schaltung (24) zum Prüfen einer digitalen Signatur von Daten, die von einem Speicher (13) gelesen werden zum Detektieren eines möglichen Betrugsversuchs, Elemente (241, 242, 243, 244, 245) aufweisend zur temporären Speicherung wenigstens von Adressen (A) von Daten (D), von aktuellen Signaturen (fc), die eine Funktion von den Adressen und Daten sind, und von Signaturen, die in dem Speicher (f) für mehrere aufeinanderfolgende Daten aufgezeichnet sind und Berechungs- und Vergleichselemente (114), die geeignet sind zum Berechnen einer aktuellen digitalen Signatur (fc) von den gelesenen Daten mittels einer Funktion die auch die Adresse von diesen Daten in dem Speicher berücksichtigt; und
Prüfen der Kohärenz zwischen der aktuellen Signatur und einer zuvor aufgezeichneten Signatur (fc).

12. Schaltung nach Anspruch 11, wobei eines von den temporären Speicherelementen die Adressen (K(A)) von den in dem Speicher (13) aufgezeichneten Signaturen (f) speichert.

13. Eine Smart Card bzw. Chipkarte, die die Schaltung nach Anspruch 11 oder 12 aufweist.
